# EUROPÄISCHE PATENTSCHRIFT

(11) **EP 4 169 112 B1**
(45) Veröffentlichungstag und Bekanntmachung des Hinweises auf die Patenterteilung: **20.11.2024**
(21) Anmeldenummer: 21733388.9
(22) Anmeldetag: 09.06.2021
(51) Int. Cl.: H01M 10/643, H01M 50/213, H01M 10/655, H01M 50/502

(54) **BATTERIEMODUL, VERFAHREN ZUR HERSTELLUNG EINES SOLCHEN UND VERWENDUNG EINES SOLCHEN**
BATTERY MODULE, METHOD FOR THE PRODUCTION THEREOF AND USE THEREOF
MODULE DE BATTERIE, SON PROCÉDÉ DE PRODUCTION ET SON UTILISATION

(30) Priorität: 19.06.2020 DE 102020207630
(43) Veröffentlichungstag der Anmeldung: 26.04.2023
(73) Patentinhaber: Robert Bosch GmbH, 70442 Stuttgart (DE)
(72) Erfinder: TIEFENBACH, Andy, 71665 Vaihingen-Horrheim (DE); GLEITER, Andreas, 70437 Stuttgart (DE); MANKA, Daniel, 74343 Sachsenheim (DE)
(86) Internationale Anmeldenummer: PCT/EP2021/065473
(87) Internationale Veröffentlichungsnummer: WO 2021/254846

(56) Entgegenhaltungen:
- WO-A1-2019/113647
- DE-A1- 102016 001 569
- DE-U1- 212013 000 082

## Beschreibung

### Stand der Technik

Die Erfindung geht aus von einem Batteriemodul mit einer Mehrzahl an zylindrisch ausgebildeten Batteriezellen nach Gattung des unabhängigen Anspruchs. Gegenstand der vorliegenden Erfindung sind auch ein Verfahren zur Herstellung eines solchen Batteriemoduls und die Verwendung eines solchen Batteriemoduls.

Aus dem Stand der Technik ist bekannt, dass Batteriemodule aus einer Mehrzahl an einzelnen Batteriezellen bestehen können, welche seriell und/oder parallel elektrisch leitend miteinander verschaltet sein können, so dass die einzelnen Batteriezellen zu dem Batteriemodul zusammengeschaltet sind.

Weiterhin werden solche Batteriemodule zu Batterien bzw. zu gesamten Batteriesystemen zusammengeschaltet.

Insbesondere für leichte elektrisch angetriebene Fahrzeuge, zu Englisch auch als light electric vehicle (LEV) bekannt, sind vergleichbar leichte und bevorzugt skalierbare Batteriesysteme auszubilden. Dabei kann eine Vielzahl an vergleichbar kleinen und üblicherweise zylindrisch ausgebildeten Batteriezellen zu dem Batteriemodul bzw. auch zu der Batterie zusammengeschaltet werden.

Zu einer Überwachung der Batteriezellen eines Batteriemoduls werden üblicherweise Steuerungseinheiten, welche auch als Batteriemanagementsysteme (BMS) bekannt sind, genutzt. Diese werden bspw. für eine Spannungsmessung oder Temperaturmessung, mittels Kabelbäumen mit an den Batteriezellen angeordneten Sensoren verbunden. Kabelbäume sind in der Fertigung durchaus mit Risiken behaftet, da Batteriezellen als Spannungsquellen nicht abgeschaltet werden können. Sollte eine Leitung eines Kabelbaums beschädigt sein, droht bspw. ein Kurzschluss, welcher unter Umständen zu einem sicherheitskritischen Verhalten einer Batteriezelle führen kann.

Beispielsweise die Druckschriften EP 3472877 A1 und US 2014/0234668 offenbaren jeweils ein Batteriemodul mit einer Mehrzahl an Batteriezellen. Der Oberbegriff von Anspruch 1 basiert auf der DE 10 2016 001569 A1.

### Offenbarung der Erfindung

Ein Batteriemodul mit einer Mehrzahl an zylindrisch ausgebildeten Batteriezellen mit den Merkmalen des unabhängigen Anspruchs bietet den Vorteil, dass bspw. auf aus dem Stand der Technik bekannte Kabelbäume verzichtet werden. Insbesondere können dadurch die Risiken eines Kurzschlusses reduziert bzw. gänzlich ausgeschlossen werden. Insbesondere kann eine Anbindung ausschließlich über Kontakte zwischen Zellverbindern und einer Steuerungseinheit bzw. über in der Steuerungseinheit integrierte Sensoren ausgebildet werden.

Dazu wird ein Batteriemodul mit einer Mehrzahl an zylindrisch ausgebildeten Batteriezellen zur Verfügung gestellt. Insbesondere sind die Batteriezellen dabei als Lithium-lonen-Batteriezellen ausgebildet.

Das Batteriemodul umfasst ein erstes Gehäuseelement, welches eine Mehrzahl an zylindrisch ausgebildeten ersten Aufnahmen aufweist. In den ersten Aufnahmen ist dabei eine erste Mehrzahl an Batteriezellen aufgenommen, welche elektrisch leitend seriell und/oder parallel miteinander verschaltet sind.

Das Batteriemodul umfasst ein zweites Gehäuseelement, welches eine Mehrzahl an zylindrisch ausgebildeten zweiten Aufnahmen aufweist. In den zweiten Aufnahmen ist dabei eine zweite Mehrzahl an Batteriezellen aufgenommen, welche elektrisch leitend seriell und/oder parallel miteinander verschaltet sind.

Weiterhin umfasst das erste Gehäuseelement einen ersten Grundkörper, an welchem die ersten Aufnahmen angeordnet sind und umfasst das zweite Gehäuseelement einen zweiten Grundkörper, an welchem die zweiten Aufnahmen angeordnet sind.

Der erste Grundkörper und der zweite Grundkörper sind dabei unter Ausbildung eines Aufnahmeraumes miteinander verbunden. In dem Aufnahmeraum können dabei insbesondere Zellverbinder zu einer elektrisch leitenden seriellen und/oder parallelen Verschaltung der ersten Mehrzahl an Batteriezellen und der zweiten Mehrzahl an Batteriezellen angeordnet sein. Weiterhin ist in dem Aufnahmeraum eine Steuerungseinrichtung des Batteriemoduls aufgenommen.

Durch die in den abhängigen Ansprüchen aufgeführten Maßnahmen sind vorteilhafte Weiterbildungen und Verbesserungen der im unabhängigen Anspruch angegebenen Vorrichtung möglich.

Eine erfindungsgemäße Ausführungsform des Batteriemoduls bietet den besonderen Vorteil, dass die zylindrisch ausgebildeten Batteriezellen unmittelbar durch das erste Gehäuseelement bzw. das zweite Gehäuseelement aufgenommen werden können und dadurch beispielsweise auf zusätzliche Zellhalterelemente verzichtet werden kann. An dieser Stelle sei bemerkt, dass das erste Gehäuseelement und das zweite Gehäuseelement insbesondere auch als Halbschalen eines Gehäuses des Batteriemoduls bezeichnet sein können, die gemeinsam das Gehäuse ausbilden.

An dieser Stelle sei angemerkt, dass zylindrische Batteriezellen auch als Rundzellen bezeichnet sein können. Zylindrische Batteriezellen weisen Im Wesentlichen eine zylindrische Mantelfläche mit einer kreisrunden Querschnittsfläche auf, welche an ihren beiden gegenüberliegenden Seiten jeweils von einer kreisrunden Boden- bzw. Deckelfläche abgeschlossen ist. Besonders bevorzugt sind die zylindrischen Batteriezellen, welche bspw. keine aus Kunststoff ausgebildete Ummantelung aufweisen und welche bspw. ein elektrisch leitfähig ausgebildetes Gehäuse aus einem metallischen Werkstoff umfassen, jeweils Rundzellen vom Typ 18650 bzw. Typ 21700, welche einen Durchmesser von ca. 18 mm und eine Höhe von ca. 65 mm bzw. einen Durchmesser von ca. 21 mm und eine Höhe von ca. 70 mm aufweisen. Das Gehäuse der zylindrisch ausgebildeten Batteriezellen ist dabei üblicherweise negativ geladen und bildet den negativen Spannungsabgriff der jeweiligen Batteriezelle aus. Weiterhin ist an einer Deckelfläche der positive Spannungsabgriff der Batteriezelle angeordnet, welcher gegen das Gehäuse und damit den negativen Spannungsabgriff elektrisch isoliert ist.

Insgesamt kann dabei eine elektrische Verschaltung der ersten Mehrzahl an Batteriezellen und der zweiten Mehrzahl an Batteriezellen ausgebildet werden, wobei die Zellverbinder innerhalb des ersten Grundkörpers bzw. des zweiten Grundkörpers angeordnet sein können. Weiterhin ist in dem Aufnahmeraum auch eine Steuerungseinrichtung des Batteriemoduls aufgenommen. Die Steuerungseinrichtung des Batteriemoduls ist dabei insbesondere ein Batteriemanagementsystem (BMS). Die Steuerungseinrichtung des Batteriemoduls ist dabei zwischen der ersten Mehrzahl an Batteriezellen und der zweiten Mehrzahl an Batteriezellen und somit auch insbesondere zwischen den ersten Aufnahmen und den zweiten Aufnahmen angeordnet.

Zur Positionierung der Steuerungseinrichtung des Batteriemoduls kann das Batteriemodul weiterhin Führungselemente aufweisen, welche dazu dienen, die Steuerungseinrichtung des Batteriemoduls entsprechend an dem ersten Gehäuseelement bzw. an dem zweiten Gehäuseelement zu positionieren, insbesondere definiert zu positionieren.

Zylindrische Aufnahmen sind an dieser Stelle jeweils Hohlkörper, welche zumindest teilweise durch eine zylindrische Mantelfläche mit einer kreisrunden Querschnittsfläche begrenzt sind. Weiterhin weisen die zylindrischen Aufnahmen eine Bodenfläche auf, welche die zylindrische Aufnahme an einer Bodenseite ebenfalls begrenzt. An der der Bodenseite gegenüberliegenden Seite weist der zylindrische Hohlkörper eine Öffnung auf, durch welche eine Batteriezelle in die Aufnahme eingesetzt werden kann. An dieser Stelle sei dabei bemerkt, dass die Batteriezellen unmittelbar, wie beispielsweise ohne die Anordnung einer isolierenden Schicht, wie auch z.B. Luft, in der jeweiligen Aufnahme aufgenommen werden können.

In einer Aufnahme ist dabei insbesondere jeweils genau eine Batteriezelle aufgenommen.

Unter einer Anordnung einer Aufnahme an einem Grundkörper eines Gehäuseelements soll verstanden sein, dass die Aufnahme bspw. mit dem Grundkörper einteilig verbunden ausgebildet ist, wobei der Grundkörper eine Öffnung aufweist, welche der Öffnung des zylindrischen Hohlkörpers der Aufnahme entspricht. Damit kann eine Batteriezelle durch die Öffnung des Grundkörpers bzw. der Öffnung der Aufnahme in die jeweilige Aufnahme eingesetzt werden. Die bspw. kreisrunde Querschnittsfläche einer Batteriezelle ist dabei bevorzugt in direktem Kontakt mit der jeweiligen kreisrunden Querschnittsfläche des zylindrischen Hohlkörpers der Aufnahme angeordnet. Besonders vorteilhaft ist zudem eine stoffschlüssige Verbindung zwischen dem Gehäuse der jeweiligen Batteriezelle und der Aufnahme ausgebildet. Diese solche stoffschlüssige Verbindung ist bspw. durch Adhäsive oder Pasten realisierbar und kann eine optimale thermische Anbindung zwischen der jeweiligen Batteriezelle und der jeweiligen Aufnahme ausbilden.

Gemäß einem bevorzugten Aspekt der Erfindung sind der erste Grundkörper und der zweite Grundkörper formschlüssig miteinander verbunden. Solche Verbindungen können auf besonders einfache Weise ausgebildet werden. Selbstverständlich ist es auch möglich, dass der erste Grundkörper und der zweite Grundkörper kraftschlüssig und insbesondere kraft- und formschlüssig miteinander verbunden sind. Beispielsweise kann eine solche Verbindung zusätzlich mittels Schraubens ausgebildet werden. Es ist auch möglich, den ersten Grundkörper und den zweiten Grundkörper stoffschlüssig miteinander zu verbinden. Eine solche stoffschlüssige Verbindung kann beispielsweise mittels Kunststoffschweißens der polymeren Werkstoffe ausgebildet werden.

Besonders bevorzugt sind erste Grundkörper und der zweite Grundkörper mittels einer Falzverbindung miteinander verbunden. Insbesondere ist dabei bevorzugt, wenn die Falzverbindung umlaufend über die gesamte Verbindung zwischen dem ersten Grundkörper und dem zweiten Grundkörper ausgebildet ist. Dazu kann beispielsweise der erste Grundkörper ein erstes Falzelement aufweisen und der zweite Grundkörper kann ein zweites Falzelement aufweisen, welche mittels einer entsprechenden Falzverbindung formschlüssig oder form- und kraftschlüssig verbunden werden können. Dazu kann zur Ausbildung einer Falzverbindung beispielsweise das erste Falzelement in das zweite Falzelement eingesteckt werden. Zur Ausbildung einer besonders zuverlässigen Verbindung kann weiterhin das erste Falzelement und/oder das zweite Falzelement nach dem Einstecken verformt werden.

Insgesamt ist es dadurch möglich, eine dicht ausgebildete Verbindung zwischen dem ersten Gehäuseelement und dem zweiten Gehäuseelement auszubilden, welche zum Beispiel auch entsprechende Normen hinsichtlich einer Dichtheit erfüllen kann. Insbesondere könnten dazu das erste Falzelement und/oder das zweite Falzelement ein entsprechendes Dichtelement umfassen, um die Dichtheit noch weiter erhöhen zu können. Bspw. kann das Dichtelement in das Falzelement integriert sein.

Besonders bevorzugt kann eine solche Falzverbindung gleichzeitig auch zumindest eine Führungsschiene ausbilden, welche dazu ausgebildet ist, das Batteriemodul in einem Fahrzeug aufzunehmen. Dadurch kann eine vergleichbar einfache Einführung der Batterie in ein Fahrzeug zur Verfügung gestellt werden, wobei die Falzverbindung weiterhin eine zuverlässige Fixierung der Batterie in dem Fahrzeug zur Verfügung stellen kann. Insgesamt kann die Batterie eines Fahrzeuges somit auf einfache Weise gewechselt werden.

Ferner ist es auch möglich, dass in die Falzverbindung ein Haltegriff bzw. ein Tragegriff integriert ist. Der Haltegriff bzw. der Tragegriff kann auch als ein Halteband bzw. ein Trageband ausgebildet sein. Auch kann die Falzverbindung beispielsweise so ausgebildet werden, dass auf einfache Weise ein Haltegriff bzw. ein Tragegriff angesteckt werden kann oder dass auf einfache Weise ein Halteband bzw. ein Trageband angeordnet werden kann. Insbesondere wird dabei die Dichtheit nicht beeinträchtigt.

Vorteilhafterweiße umfasst das Batteriemodul einen in den ersten Grundkörper und/oder den zweiten Grundkörper integrierten elektronischen Anschluss. Der elektronische Anschluss ist dabei dazu ausgebildet, die Steuerungseinrichtung des Batteriemoduls zu kontaktieren. Der elektronische Anschluss ist dabei regelungstechnisch mit der Steuerungseinrichtung des Batteriemoduls verbunden. Dies bietet den Vorteil, dass elektrische bzw. elektronische Leitungen in der Art reduziert werden können, dass beispielsweise nur der elektronische Anschluss mit der Steuerungseinrichtung des Batteriemoduls zu verbinden ist. Insbesondere ist der elektronische Anschluss als Steckverbindung ausgebildet.

Gemäß einem bevorzugten Aspekt der Erfindung, umfasst das Batteriemodul einen elektrischen Anschluss. Der elektrische Anschluss ist dabei in den ersten Grundkörper und/oder in den zweiten Grundkörper integriert. Insbesondere ist der elektrische Anschluss dazu ausgebildet, eine Spannung von dem Batteriemodul abzugreifen oder die Mehrzahl an Batteriezellen elektrisch laden zu können. Besonders bevorzugt umfasst das Batteriemodul zwei elektrische Anschlüsse, wie beispielsweise einen positiven elektrischen Anschluss und einen negativen elektrischen Anschluss. Insbesondere ist der elektrische Anschluss bzw. sind die elektrischen Anschlüsse jeweils als Steckverbindung ausgebildet. Dadurch ist es insgesamt möglich, das Batteriemodul elektrisch beispielsweise an ein Fahrzeug anzubinden. Der Vorteil einer Steckverbindung besteht in einer besonders einfachen Anbindung. An dieser Stelle sei weiterhin angemerkt, dass der elektrische Anschluss bevorzugt in der Art in die Falzverbindung integriert sein kann, dass die Falzverbindung an der Stelle des elektrischen Anschlusses mit einer größeren Breite ausgeführt ist.

Es sei angemerkt, dass die Einführungsrichtung eines Batteriemoduls in ein Fahrzeug bevorzugt auch die Steckrichtung bestimmt. Vorteilhaft ist eine Ausbildung, bei welcher erst am Ende des Montageprozesses die endgültige Anordnung des elektronischen Anschlusses festzulegen ist. Hierdurch kann die Auslegung des Batteriemoduls ohne Designänderung besser auf unterschiedlichste Fahrzeugtypen angepasst werden, da verschiedene Einführungsrichtungen mit einem Design möglich sind.

Besonders bevorzugt ist der elektrische Anschluss und/oder der elektronische Anschluss an einer Seite des ersten Grundkörpers und/oder des zweiten Grundkörpers angeordnet, welche senkrecht zu einer als Führungsschiene ausgebildeten Falzverbindung angeordnet ist. Dadurch kann eine besonders zuverlässige Anbindung an ein Fahrzeug bzw. ein Ladegerät ausgebildet werden.

Vorteilhafterweiße ist die erste Mehrzahl an Batteriezellen in Richtung einer längsten Ausdehnung des ersten Grundkörpers parallel miteinander in parallelen ersten Strängen verschaltet und/oder ist die zweite Mehrzahl an Batteriezellen in Richtung einer längsten Ausdehnung des zweiten Grundkörpers parallel miteinander in parallelen zweiten Strängen verschaltet. Dabei ist die Steuerungseinrichtung ausgebildet, jeden einzelnen parallelen ersten Strang und parallelen zweiten Strang zu überwachen.

Dazu ist die erste Mehrzahl an Batteriezellen bzw. die zweite Mehrzahl an Batteriezellen beispielsweise derart angeordnet, dass die Batteriezellen eines parallelen ersten Strangs bzw. eines parallelen zweiten Strangs jeweils in Richtung einer längsten Ausdehnung des ersten Grundkörpers bzw. des zweiten Grundkörpers unmittelbar benachbart zueinander angeordnet sind, wobei die Längsrichtungen der Batteriezellen alle in einer selben Ebene angeordnet sind. Die Mehrzahl an parallelen ersten Strängen bzw. die Mehrzahl an parallelen zweiten Strängen sind dabei in einer senkrecht zu der längsten Ausdehnung des ersten Grundkörpers bzw. der längsten Ausdehnung des zweiten Grundkörpers angeordneten kürzesten Ausdehnung des ersten Grundkörpers bzw. des zweiten Grundkörpers nebeneinander angeordnet. Die Anordnung der Steuerungseinrichtung des Batteriemoduls kann dabei insbesondere an dem ersten Gehäuseelement und/oder dem zweiten Gehäuseelement orientiert werden. Insbesondere erstreckt sich die Steuerungseinrichtung des Batteriemoduls im Wesentlichen über die gesamte Länge der kürzesten Ausdehnung des ersten Grundkörpers bzw. der kürzesten Ausdehnung des zweiten Grundkörpers. Dadurch ist es möglich, alle parallelen ersten Stränge und alle parallelen zweiten Stränge zu überwachen.

Insbesondere kann die Erstreckung der Steuerungseinrichtung des Batteriemoduls über der längsten Ausdehnung des ersten Grundkörpers bzw. der längsten Ausdehnung des zweiten Grundkörpers entsprechend den Anforderungen an die Überwachung angepasst werden.

Mit anderen Worten ausgedrückt bedeutet dies, dass die Größe der Steuerungseinrichtung des Batteriemoduls in Abhängigkeit der gewünschten Funktionen gewählt werden kann.

Besonders vorteilhaft ist es, wenn die Steuerungseinrichtung zumindest ein erstes Sensorelement umfasst, das dazu ausgebildet ist, eine Zustandsgröße einer Batteriezelle der ersten Mehrzahl an Batteriezellen zu erfassen und/oder die Steuerungseinrichtung zumindest ein zweites Sensorelement umfasst, das dazu ausgebildet ist, eine Zustandsgröße einer Batteriezelle der zweiten Mehrzahl an Batteriezellen zu erfassen. Eine Zustandsgröße einer Batteriezelle kann dabei beispielsweise eine Temperatur, eine Spannung oder ein Alterungszustand sein. Dabei können das erste Sensorelement und/oder das zweite Sensorelement mit einer ersten Klemmverbindung bzw. einer zweiten Klemmverbindung, welche mit dem ersten Gehäuseelement und/oder dem zweiten Gehäuseelement verbunden sind, elektrisch und mechanisch verbunden werden. Dadurch ist es auch möglich, die Steuerungseinrichtung des Batteriemoduls mechanisch in dem Batteriemodul zu fixieren.

Bevorzugt ist das erste Sensorelement mit einem Zellverbinder verbunden, welcher zwei Batteriezellen der ersten Mehrzahl an Batteriezellen elektrisch leitend verbindet und/oder ist das zweite Sensorelement mit einem Zellverbinder verbunden, welcher zwei Batteriezellen der zweiten Mehrzahl an Batteriezellen elektrisch leitend verbindet. Das erste Sensorelement und/oder das zweite Sensorelement können dabei bevorzugt als Federkontaktstift auf eine Platine der Steuerungseinrichtung des Batteriemoduls gelötet sein und eine unmittelbare mechanische und elektrische Kontaktierung der Zellverbinder ausbilden.

Insbesondere können dadurch die Spannungen eines ersten parallelen Strangs oder eines zweiten parallelen Strangs erfasst werden.

Beispielsweise könnten die Zellverbinder jeweils auch zumindest eine Welle umfassen, welche zwischen den jeweiligen Anbindungsbereichen angeordnet ist. Weiterhin könnten das erste Sensorelement bzw. das zweite Sensorelement die zumindest eine Welle des jeweiligen Zellverbinders mechanisch und elektrisch kontaktieren. Insbesondere könnte die Welle des Zellverbinders zusätzlich als Federelement ausgebildet sein, welches gegen das erste Sensorelement bzw. das zweite Sensorelement drückt.

An dieser Stelle sei angemerkt, dass vorteilhafterweiße die zylindrisch ausgebildete Mantelfläche einer jeden ersten Aufnahme des ersten Gehäuseelements und einer jeden zweiten Aufnahme des zweiten Gehäuseelements von Temperierfluid umströmbar angeordnet ist. Das Temperierfluid ist dabei bevorzugt ein Temperiergas, wie beispielsweise Luft. Mit anderen Worten ausgedrückt bedeutet dies, dass die einem Innenraum der Aufnahme, in welchem die jeweilige Batteriezelle aufgenommen ist, gegenüberliegend angeordnete Außenseite der Aufnahme unmittelbar benachbart zu einer Umgebung angeordnet ist. Dadurch kann insgesamt jede Batteriezelle passiv gekühlt werden, da das erste Gehäuseelement und das zweite Gehäuseelement über eine vergleichbar große Oberfläche verfügen. Besonders bevorzugt können dadurch auch mittig angeordnete Batteriezellen zuverlässig temperiert werden.

An dieser Stelle sei angemerkt, dass vorteilhafterweise zwischen einer zylindrischen Mantelfläche einer ersten Aufnahme des ersten Gehäuseelements und einer zylindrischen Mantelfläche einer zweiten Aufnahme des zweiten Gehäuseelements eine weiteres Ausgleichsmaterial angeordnet sein kann. Bei Anwendungsformen mit geringeren thermischen Anforderungen bspw. aufgrund vergleichbar großer Temperaturgradienten zwischen der Batteriezelle und der Umgebung, aufgrund von geringen elektrischen Strömen oder aufgrund der Verwendung von Batteriezellen mit geringem Innenwiderstand könnten die Batteriezellen somit auch ausschließlich über die kreisrunde Bodenfläche der jeweiligen Aufnahme temperiert werden. Mit anderen Worten ausgedrückt, könnte die Temperierung also über die kreisrunde Bodenfläche der jeweiligen Aufnahme anstelle einer bspw. zusätzlichen Temperierung über die jeweiligen zylindrischen Mantelflächen. Dazu könnten Freiräume zwischen den zylindrischen Mantelflächen der jeweiligen Aufnahme mit einem weiteren Ausgleichsmaterial Werkstoff aufgefüllt sein. Dadurch ergeben sich Möglichkeiten das Modul mechanisch äußerst robust auszuführen, vereinfacht zu fertigen und den Abstand zwischen zwei Aufnahmen weiter zu reduzieren.

Es ist zweckmäßig, wenn das erste Gehäuseelement und das zweite Gehäuseelement aus einem polymeren Werkstoff ausgebildet sind. Beispielsweise kann der polymere Werkstoff ausgewählt sein als ein Polyamid (PA), wie beispielsweise PA 66. Dadurch ist es möglich, das Gewicht des Batteriemoduls zu minimieren und gleichzeitig eine ausreichende mechanische Festigkeit zur Verfügung zu stellen. Weiterhin können das erste Gehäuseelement und das zweite Gehäuseelement Glasfasern umfassen, welche beispielsweise in den polymeren Werkstoff eingebettet sein können. Bevorzugt weisen das erste Gehäuseelement und das zweite Gehäuseelement, insbesondere die Mehrzahl an ersten Aufnahmen und die Mehrzahl an zweiten Aufnahmen, eine Wandstärke kleiner als 2 mm und insbesondere von 1 mm auf. Somit kann das Gewicht des Batteriemoduls bei einer gleichzeitig ausreichenden mechanischen Festigkeit in der Art reduziert werden, dass weiterhin auch eine zuverlässige Temperierung der Mehrzahl an zylindrisch ausgebildeten Batteriezellen möglich ist.

Das erste Gehäuseelement und das zweite Gehäuseelement können durch unterschiedliche Fertigungstechnologien, wie beispielsweise Tiefziehen, kostengünstig ausgebildet werden.

Besonders vorteilhaft ist es, wenn die erste Mehrzahl an Batteriezellen und die zweite Mehrzahl an Batteriezellen unmittelbar gegenüberliegend angeordnet sind. Darunter soll verstanden werden, dass die zylindrisch ausgebildeten Batteriezellen jeweils eine Längsrichtung aufweisen, wobei die Längsrichtungen der ersten Mehrzahl an Batteriezellen und die Längsrichtung der zweiten Mehrzahl an Batteriezellen parallel zueinander angeordnet sind. Weiterhin sind auch die Längsrichtung der ersten Mehrzahl an Batteriezellen und die Längsrichtung der zweiten Mehrzahl an Batteriezellen parallel zueinander angeordnet. Insbesondere sind dabei auch das erste Gehäuseelement und das zweite Gehäuseelement unmittelbar gegenüberliegend angeordnet. Der besondere Vorteil der Erfindung liegt weiterhin darin, dass dadurch neben einem geringen Bauraum eine elektrische Verschaltung der einzelnen Batteriezellen mittels vergleichbar kurzen Zellverbindern ausgebildet werden kann.

Gegenstand der vorliegenden Erfindung ist auch die Verwendung eines eben beschriebenen erfindungsgemäßen Batteriemoduls in einem leicht elektrisch angetriebenen Fahrzeug (light electric vehicle; LEV). Damit kann ein thermisch optimiertes und skalierbares Gesamtkonzept eines Batteriemoduls für ein leicht elektrisch angetriebenes Fahrzeug (LEV) zur Verfügung gestellt werden.

Zudem ist auch ein Verfahren zur Herstellung eines eben beschriebenen Batteriemoduls mit einer Mehrzahl an zylindrisch ausgebildeten Batteriezellen, insbesondere Lithium-lonen-Batteriezellen, Gegenstand der vorliegenden Erfindung. Dabei wird ein erster Grundkörper eines ersten Gehäuseelement mit einer Mehrzahl an zylindrisch ausgebildeten ersten Aufnahmen, in welchen eine erste Mehrzahl an elektrisch seriell und/oder parallel miteinander verschalteten Batteriezellen aufgenommen ist und ein zweiter Grundkörper eines zweiten Gehäuseelement mit einer Mehrzahl an zylindrisch ausgebildeten zweiten Aufnahmen, in welchen eine zweite Mehrzahl an elektrisch seriell und/oder parallel miteinander verschalteten Batteriezellen aufgenommen ist unter Ausbildung eines Aufnahmeraumes, in welchem bspw. Zellverbinder zu einer elektrisch leitenden seriellen und/oder parallelen Verschaltung der ersten Mehrzahl an Batteriezellen und der zweiten Mehrzahl an Batteriezellen und eine Steuerungseinrichtung des Batteriemoduls aufgenommen sind, miteinander verbunden werden.

### Kurze Beschreibung der Zeichnungen

Ausführungsbeispiele der Erfindung sind in den Zeichnungen dargestellt und in der nachfolgenden Beschreibung näher erläutert.

Es zeigt:
- Figur 1: eine erfindungsgemäße Ausführungsform eines Batteriemoduls in einer perspektivischen Ansicht,
- Figur 2: schematisch in einer Seitenansicht eine Ausführungsform eines erfindungsgemäßen Batteriemoduls in einer Explosionsdarstellung,
- Figur 3: eine weitere erfindungsgemäße Ausführungsform eines Batteriemoduls mit einem Tragegriff in einer perspektivischen Ansicht,
- Figur 4: eine erste Anordnung einer Steuerungseinrichtung des Batteriemoduls und
- Figur 5: eine zweite Anordnung einer Steuerungseinrichtung des Batteriemoduls.

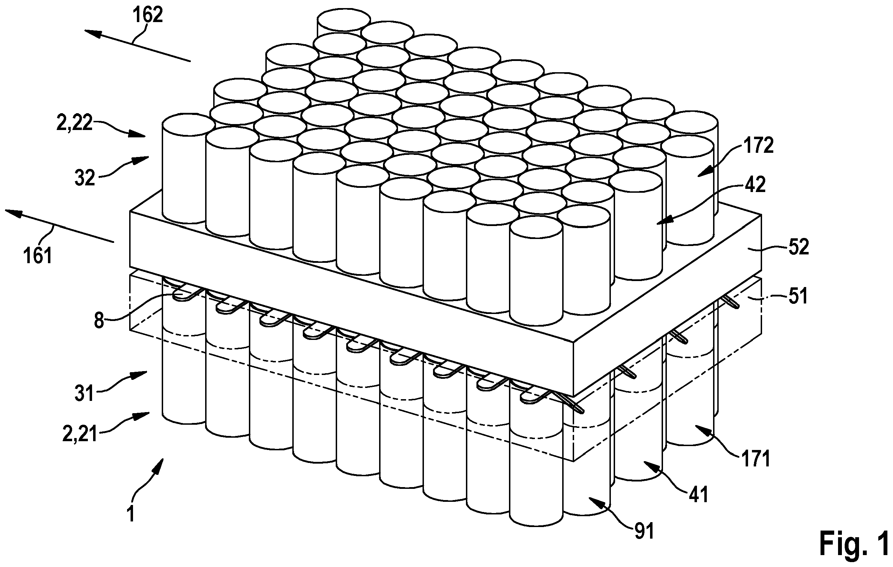

Die Figur 1 zeigt eine erfindungsgemäße Ausführungsform eines Batteriemoduls 1.

Das Batteriemodul 1 umfasst eine Mehrzahl an in der Figur 1 nicht zu erkennenden zylindrisch ausgebildeten Batteriezellen 2, welche insbesondere als Lithium-lonen-Batteriezellen 20 ausgebildet sind.

Das Batteriemodul 1 weist ein erstes Gehäuseelement 31 und ein zweites Gehäuseelement 32 auf. Das erste Gehäuseelement 31 und das zweite Gehäuseelement 32 sind dabei aus einem polymeren Werkstoff, wie beispielsweise einem Polyamid, ausgebildet.

Das erste Gehäuseelement 31 weist dabei eine Mehrzahl an zylindrisch ausgebildeten ersten Aufnahmen 41 auf und das zweite Gehäuseelement 32 weist dabei eine Mehrzahl an zylindrisch ausgebildeten zweiten Aufnahmen 42 auf. Jede erste Aufnahme 41 des ersten Gehäuseelements 31 umfasst dabei eine zylindrisch ausgebildete Mantelfläche 91, welche allesamt von Temperierfluid umströmbar angeordnet sind. Jede zweite Aufnahme 42 des zweiten Gehäuseelements 32 umfasst dabei eine zylindrisch ausgebildete Mantelfläche 92, welche allesamt von Temperierfluid umströmbar angeordnet sind. An dieser Stelle sei angemerkt, dass bevorzugt die zylindrisch ausgebildeten Mantelflächen 91 der ersten Aufnahmen 41 und die zylindrisch ausgebildeten Mantelflächen 92 der zweiten Aufnahmen 42 vollständig, zumindest aber teilweise von Temperierfluid umströmbar angeordnet sind. Insbesondere können sich zylindrisch ausgebildete Mantelflächen 91 bzw. zylindrisch ausgebildete Mantelflächen 92 untereinander berühren.

Die ersten Aufnahmen 41 nehmen dabei eine erste Mehrzahl 21 an Batteriezellen 2 auf, welche elektrisch seriell und/oder parallel miteinander verschaltet sind. Die zweiten Aufnahmen 42 nehmen dabei eine zweite Mehrzahl 22 an Batteriezellen 2 auf, welche elektrisch seriell und/oder parallel miteinander verschaltet sind.

Beispielsweise können die Batteriezellen 2 dabei jeweils entlang der längeren Seiten parallel miteinander geschaltet sein. Die serielle Verschaltung kann entlang einer kürzeren Seite erfolgen.

Das erste Gehäuseelement 31 umfasst des Weiteren einen ersten Grundkörper 51, an welchem die ersten Aufnahmen 41 angeordnet sind.

Das zweite Gehäuseelement 32 umfasst des Weiteren ein zweiten Grundkörper 52, an welchem die zweiten Aufnahmen 52 angeordnet sind.

Insbesondere weisen der erste Grundkörper 31 und/oder der zweite Grundkörper 32 im Wesentlichen eine quaderförmige Grundform auf.

Der erste Grundkörper 51 und der zweite Grundkörper 52 sind dabei unter Ausbildung eines in der Figur 1 nicht zu erkennenden Aufnahmeraums 6 miteinander verbunden. Der erste Grundkörper 31 und der zweite Grundkörper 32 sind dabei mittels einer Falzverbindung 8 formschlüssig miteinander verbunden. Die Falzverbindung 8 ist dabei umlaufend an der Verbindung zwischen dem ersten Grundkörper 31 und dem zweiten Grundkörper 32 angeordnet und dichtet das Batteriemodul 1 gegenüber einer Umgebung des Batteriemoduls 1 ab. In dem Aufnahmeraum 6 sind dabei Zellverbinder 7, welche in der Figur 1 auch nicht zu erkennen sind, angeordnet. Die Zellverbinder 7 verbinden die erste Mehrzahl 21 an Batteriezellen 2 bzw. die zweite Mehrzahl 22 an Batteriezellen 22 elektrisch seriell und/oder parallel miteinander.

Weiterhin ist dem Aufnahmeraum 6 eine Steuerungseinrichtung 10 des Batteriemoduls 1 aufgenommen.

Zudem ist aus der Figur 1 zu erkennen, dass die erste Mehrzahl 21 an Batteriezellen 2 in Richtung einer längsten Ausdehnung 161 des ersten Grundkörpers 31 parallel miteinander in parallelen ersten Strängen 171 verschaltet ist.

Zudem ist aus der Figur 1 auch zu erkennen, dass die zweite Mehrzahl 22 an Batteriezellen 2 in Richtung einer längsten Ausdehnung 162 des zweiten Grundkörpers 32 parallel miteinander in parallelen zweiten Strängen 172 verschaltet ist.

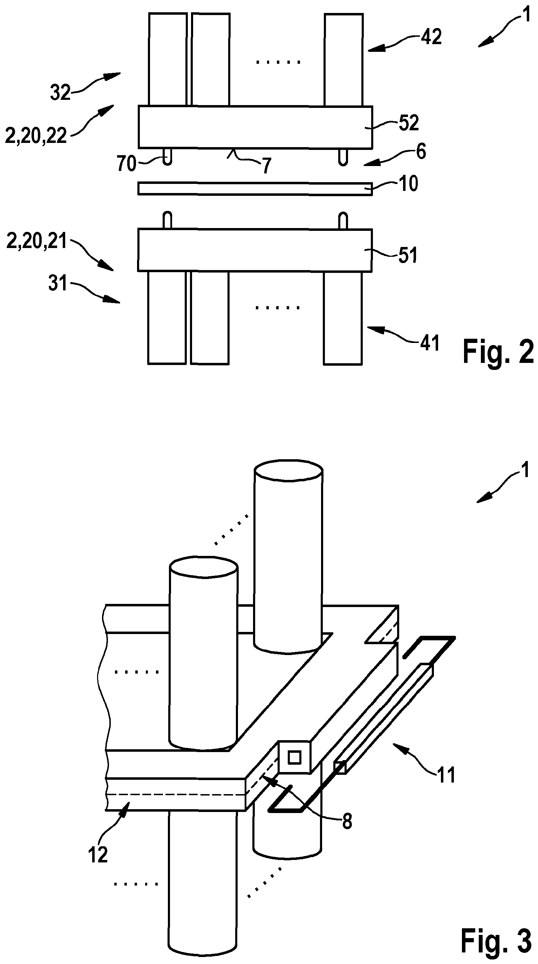

Die Figur 2 zeigt schematisch in einer Seitenansicht eine Ausführungsform eines erfindungsgemäßen Batteriemoduls 1 in einer Explosionsdarstellung.

Dabei sind zunächst das erste Gehäuseelement 31 und das zweite Gehäuseelement 32 mit den ersten Aufnahmen 41 und den zweiten Aufnahmen 42 sowie dem ersten Grundkörper 31 und dem zweiten Grundkörper 32 zu erkennen.

Dabei sind insbesondere der erste Grundkörper 51 und der zweite Grundkörper 52 noch nicht mittels einer formschlüssigen Verbindung, wie beispielsweise einer Falzverbindung 8, miteinander verbunden.

Weiterhin zeigt die Figur 2 schematisch Zellverbinder 7, welche die erste Mehrzahl 21 an Batteriezellen 2 und/oder die zweite Mehrzahl 22 an Batteriezellen 2 elektrisch leitend seriell und/oder parallel miteinander verschalten.

Zur Ausbildung des Batteriemoduls 1 werden der erste Grundkörper 51 und der zweite Grundkörper 52 unter Ausbildung eines Aufnahmeraums 6, in welchem die Zellverbinder 7 aufgenommen sind, miteinander verbunden.

Weiterhin ist zu erkennen, dass das erste Gehäuseelement 31 und/oder das zweite Gehäuseelement 32 Führungsstifte 70 umfassen können, welche zu einer Positionierung des ersten Gehäuseelements 31 bzw. des zweiten Gehäuseelements 32 oder auch der Zellverbinder 7 dienen können.

Die Figur 3 zeigt eine erfindungsgemäße Ausführungsform eines Batteriemoduls 1 mit einem Tragegriff 11 in einer perspektivischen Ansicht.

Die in der Figur 3 gezeigte Ausführungsform des Batteriemoduls 1 unterscheidet sich von der in der Figur 1 gezeigten Ausführungsform insbesondere dadurch, dass das Batteriemodul 1 einen Tragegriff 11 umfasst, welcher in die Falzverbindung 8 zwischen dem ersten Grundkörper 51 und den zweiten Grundkörper 52 integriert ist. Weiterhin weist das Batteriemodul 1 eine Führungsschiene 12 auf, welche durch die Falzverbindung 8 ausgebildet ist. Insbesondere ist die Führungsebene 12 dabei an einer Seite angeordnet, welche senkrecht zu der Seite angeordnet ist, an welcher der Tragegriff 11 angeordnet ist.

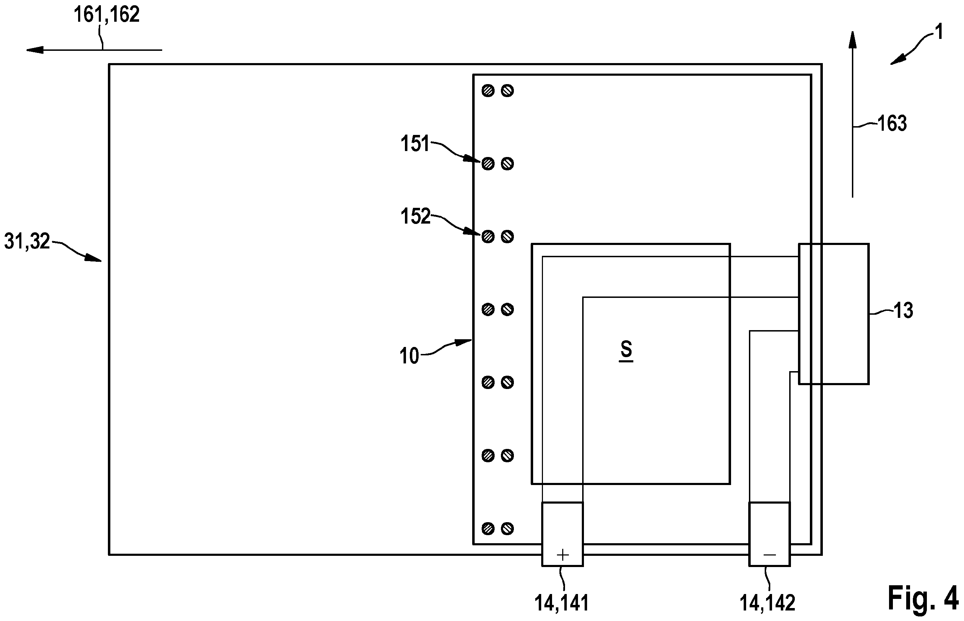

Die Figur 4 zeigt eine erste Anordnung einer Steuerungseinrichtung 10 des Batteriemoduls 1.

Das Batteriemodul 1 umfasst dabei einen elektronischen Anschluss 13, der dazu ausgebildet ist, die Steuerungseinrichtung 10 des Batteriemoduls 1 zu kontaktieren. Der elektronische Anschluss 13 ist dabei in den ersten Grundkörper 31 und/oder in den zweiten Grundkörper 32 integriert. Insbesondere kann der elektronische Anschluss 13 als Stecker ausgebildet sein. Ein solcher Stecker kann bspw. die Kontaktierung des Hochstrompfads zum Fahrzeug bzw. Ladegerät ermöglichen und kann bspw. Steuerungssignale einer nicht gezeigten Steuerungseinrichtung weiterleiten.

Das Batteriemodul 1 umfasst dabei einen elektrischen Anschluss 14. Der elektrische Anschluss 14 ist dabei dazu ausgebildet, die Batteriezellen 2 des Batteriemoduls 1 zu entladen bzw. zu laden. Insbesondere weist das Batteriemodul 1 einen ersten elektrischen Anschluss 141 und einen zweiten elektrischen Anschluss 142 auf. Der erste elektrische Anschluss 141 kann dabei insbesondere ein positiver elektrischer Anschluss sein und der zweite elektrischen Anschluss 142 kann dabei insbesondere ein negativer elektrischer Anschluss sein.

Mittels des ersten elektrischen Anschlusses 141 kann dabei bspw. eine elektrische Verbindung zu den Batteriezellen 2 des ersten Grundkörpers 31 und mittels des zweiten elektrischen Anschlusses 142 kann dabei bspw. eine elektrische Verbindung zu den Batteriezellen 2 des zweiten Grundkörpers 32 ausgebildet werden.

Die Steuerungseinrichtung 10 ermöglicht, die Verbindung zwischen dem elektronischen Anschluss 13 und den Batteriezellen 2 des ersten Grundkörpers 31 bzw. die Verbindung zwischen dem elektronischen Anschluss 13 und dem zweiten Grundkörper 32 zu trennen. Dadurch ist ein Abschaltpfad ausgebildet.

Vorzugsweise ist hierfür eine Mehrzahl mehrerer in der Figur 4 nicht zu erkennender Halbleiter auf der Steuerungseinheit 10 angeordnet. Dadurch kann insbesondere der Aufnahmeraum 6 vergleichbar flach ausgebildet werden. Der erste elektrische Anschluss 141 bzw. der zweite Anschluss 142 ist an einer Seitenfläche des ersten Grundkörper 31 bzw. des zweiten Grundkörpers 32 so angeordnet, dass der erste elektrische Anschluss 141 bzw. der zweite Anschluss 142 senkrecht zu der Steuerungseinheit 10 angeordnet ist. Weiterhin kann der erste elektrische Anschluss 141 bzw. der zweite Anschluss 142 elektrisch leitend mit einem jeweiligen Gesamtzellverbinder verbunden sein, welcher die parallel geschaltete erste Mehrzahl 21 an Batteriezellen 2 bzw. die parallel geschaltete zweite Mehrzahl 22 an Batteriezellen 2 mit der Steuerungseinheit 10 kontaktiert.

Insbesondere ist der Abschaltpfad auf der Steuerungseinheit 10 idealerweise nahe der beiden Seitenflächen des Batteriemoduls 1 angeordnet, sodass Strompfade einer Hochstromverbindung zwischen dem elektronischen Anschluss 13 und dem elektrischen Anschluss 14, insbesondere dem ersten elektrischen Anschluss 141 bzw. dem zweiten elektrischen Anschluss 142, vergleichbar kurz ausgebildet sind.

Insbesondere ergibt sich hieraus der Vorteil, dass der elektronische Anschluss 13 an mehreren Seitenflächen angeordnet sein kann. Insbesondere ist der elektronische Anschluss 13 an einer ersten Seitenfläche angeordnet und sind der erste elektrische Anschluss 141 und der zweite elektrischen Anschluss 142 an einer senkrecht zu der ersten Seitenfläche angeordneten zweiten Seitenfläche angeordnet.

Weiterhin kann der elektronischen Anschluss 13 ohne Änderung der Steuerungseinheit 10 sowohl an einer kürzeren als auch einer längeren Seitenfläche angeordnet sein.

Der elektrische Anschluss 14 ist dabei in den ersten Grundkörper 31 und/oder in den zweiten Grundkörper 32 integriert.

Weiterhin umfasst die Steuerungseinrichtung 10 des Batteriemoduls 1 erste Sensorelemente 151. Ein erstes Sensorelement 151 ist dabei dazu ausgebildet, eine Zustandsgröße einer Batteriezelle 2 der ersten Mehrzahl 21 an Batteriezellen 2 zu erfassen.

Weiterhin umfasst die Steuerungseinrichtung 10 des Batteriemoduls 1 zweite Sensorelemente 152. Ein zweites Sensorelement 152 ist dabei dazu ausgebildet, eine Zustandsgröße einer Batteriezelle 2 der zweiten Mehrzahl 22 an Batteriezellen 2 zu erfassen.

An dieser Stelle sei angemerkt, dass die ersten Sensorelemente 151 und die zweiten Sensorelemente 152 an gegenüberliegenden Seiten der Steuerungseinrichtung 10 angeordnet sind. Damit die zweiten Sensorelemente 152 erkennbar sind, ist die Steuerungseinrichtung 10 an dieser Stelle durchsichtig gezeichnet.

Die Steuerungseinrichtung 10 des Batteriemoduls 1 ist dabei dazu ausgebildet, jeden parallelen ersten Strang 171 und/oder jeden parallelen zweiten Strang 172 zu überwachen. Insbesondere ist bei der Ausführungsform gemäß Figur 4 jedes erste Sensorelement 151 dazu ausgebildet, einen parallelen ersten Strang 171 zu überwachen und ist jedes zweite Sensorelemente 152 dazu ausgebildet, einen parallelen zweiten Strang 172 zu überwachen. Die Steuerungseinrichtung 10 bedeckt dabei die erste Mehrzahl 21 an Batteriezellen 2 bzw. die zweite Mehrzahl 22 an Batteriezellen 2 in Richtung der größten Ausdehnung 161 des ersten Gehäuseelements 31 bzw. der größten Ausdehnung 162 des zweiten Gehäuseelements 32 nur teilweise. In Richtung einer dazu senkrecht angeordneten Ausdehnung 163 bedeckt die Steuerungseinrichtung 10 die erste Mehrzahl 21 an Batteriezellen 2 bzw. die zweite Mehrzahl an Batteriezellen 2 vollständig.

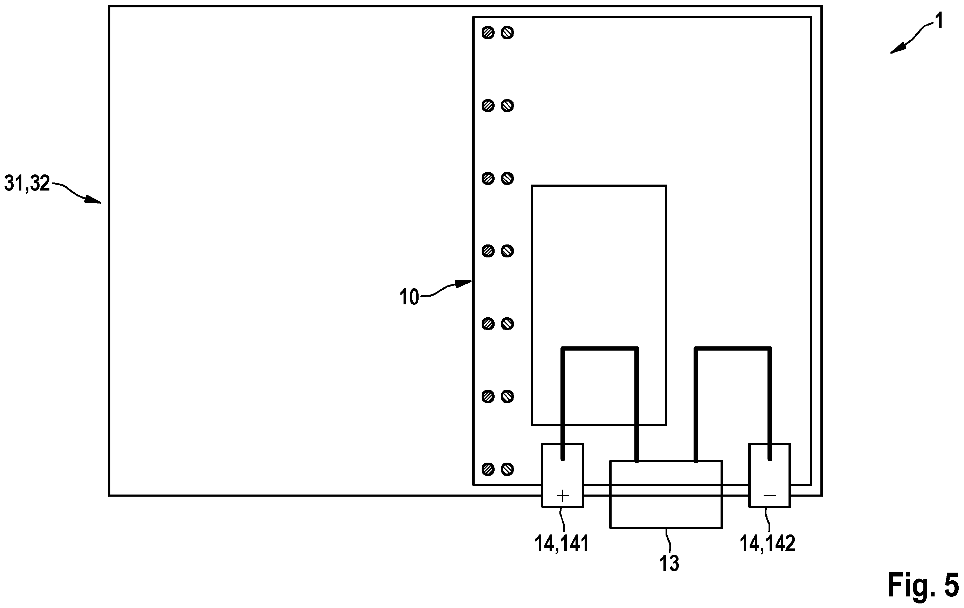

Die Figur 5 zeigt eine zweite Anordnung einer Steuerungseinrichtung 10 des Batteriemoduls 1.

Die in der Figur 5 gezeigte Ausführungsform unterscheidet sich von der der Figur 4 gezeigten Ausführungsform dadurch, dass der elektronische Anschluss 13 zwischen dem ersten elektrischen Anschluss 141 und den zweiten elektrischen Anschluss 142 angeordnet ist.

## Patentansprüche

1. Batteriemodul mit einer Mehrzahl an zylindrisch ausgebildeten Batteriezellen (2),
insbesondere Lithium-Ionen-Batteriezellen (20), und
einem ersten Gehäuseelement (31) mit einer Mehrzahl an zylindrisch ausgebildeten ersten Aufnahmen (41), in welchen
eine erste Mehrzahl (21) an elektrisch seriell und/oder parallel miteinander verschalteten Batteriezellen (2) aufgenommen ist und
einem zweiten Gehäuseelement (32) mit einer Mehrzahl an zylindrisch ausgebildeten zweiten Aufnahmen (42), in welchen
eine zweite Mehrzahl (22) an elektrisch seriell und/oder parallel miteinander verschalteten Batteriezellen (2) aufgenommen ist, wobei
das erste Gehäuseelement (31) einen ersten Grundkörper (51) aufweist, an welchem die ersten Aufnahmen (41) angeordnet sind und
das zweite Gehäuseelement (32) einen zweiten Grundkörper (52) aufweist, an welchem die zweiten Aufnahmen (42) angeordnet sind, **dadurch gekennzeichnet**,
der erste Grundkörper (51) und der zweite Grundkörper (52) unter Ausbildung eines Aufnahmeraumes (6), in welchem
eine Steuerungseinrichtung (10) des Batteriemoduls (1) aufgenommen ist, miteinander verbunden sind.

2. Batteriemodul nach dem vorhergehenden Anspruch 1,
**dadurch gekennzeichnet, dass**
der erste Grundkörper (31) und der zweite Grundkörper (32) formschlüssig miteinander verbunden sind.

3. Batteriemodul nach dem vorherigen Anspruch 2,
**dadurch gekennzeichnet, dass**
der erste Grundkörper (31) und der zweite Grundkörper (32) mittels einer Falzverbindung (8) miteinander verbunden sind.

4. Batteriemodul nach einem der vorhergehenden Ansprüche 1 bis 3,
**dadurch gekennzeichnet, dass**
das Batteriemodul (1) einen in den ersten Grundkörper (31) und/oder in den zweiten Grundkörper (32) integrierten elektronischen Anschluss (13) umfasst, welcher ausgebildet,
die Steuerungseinrichtung (10) des Batteriemoduls (1) zu kontaktieren.

5. Batteriemodul nach einem der vorhergehenden Ansprüche 1 bis 4,
**dadurch gekennzeichnet, dass**
das Batteriemodul (1) einen in den ersten Grundkörper (31) und/oder in den zweiten Grundkörper (32) integrierten elektrischen Anschluss (14, 141, 142) umfasst.

6. Batteriemodul nach einem der vorgehenden Ansprüche 1 bis 5,
**dadurch gekennzeichnet, dass**
die erste Mehrzahl (21) an Batteriezellen (2) in Richtung einer längsten Ausdehnung (161) des ersten Grundkörpers (31) parallel miteinander in parallelen ersten Strängen (171) verschaltet ist und/oder
die zweite Mehrzahl (22) an Batteriezellen (2) in Richtung einer längsten Ausdehnung (162) des zweiten Grundkörpers (32) parallel miteinander in parallelen zweiten Strängen (172) verschaltet ist, wobei
die Steuerungseinrichtung (10) des Batteriemoduls (1) ausgebildet ist, jeden parallelen ersten Strang (171) und/oder
jeden parallelen zweiten Strang (172) zu überwachen.

7. Batteriemodul nach einem der vorhergehenden Ansprüche 1 bis 6,
**dadurch gekennzeichnet, dass**
die Steuerungseinrichtung (10) des Batteriemoduls (1) zumindest ein erstes Sensorelement (151) umfasst, welches ausgebildet ist, eine Zustandsgröße einer Batteriezelle (2) der ersten Mehrzahl (21) an Batteriezellen (2) zu erfassen, und/oder
die Steuerungseinrichtung (10) des Batteriemoduls (1) zumindest ein zweites Sensorelement (152) umfasst, welches ausgebildet ist, eine Zustandsgröße einer Batteriezelle (2) der zweiten Mehrzahl (22) an Batteriezellen (2) zu erfassen.

8. Batteriemodul nach dem vorhergehenden Anspruch 7,
**dadurch gekennzeichnet, dass**
das erste Sensorelement (151) mit einem zwei Batteriezellen (2) der ersten Mehrzahl (21) an Batteriezellen (2) elektrisch verbindenden Zellverbinder (7) verbunden ist und/oder
das zweite Sensorelement (152) mit einem zwei Batteriezellen (2) der zweiten Mehrzahl (22) an Batteriezellen (2) elektrisch verbindenden Zellverbinder (7) verbunden ist.

9. Batteriemodul nach einem der vorhergehenden Ansprüche 1 bis 5,
**dadurch gekennzeichnet, dass**
das erste Gehäuseelement (31) und das zweite Gehäuseelement (32) aus einem polymeren Werkstoff ausgebildet sind.

10. Batteriemodul nach einem der vorhergehenden Ansprüche 1 bis 6,
**dadurch gekennzeichnet, dass**
die erste Mehrzahl (21) an Batteriezellen (2) und
die zweite Mehrzahl (22) an Batteriezellen (2)
unmittelbar gegenüberliegend angeordnet sind.

11. Batteriemodul nach einem der vorhergehenden Ansprüche 1 bis 10,
**dadurch gekennzeichnet, dass**
die Steuerungseinrichtung (10) eine Verbindung zwischen dem ersten elektrischen Anschluss (141) bzw.
dem zweiten elektrischen Anschluss (142) und
dem elektronischen Anschluss (13) trennen kann.

12. Verfahren zur Herstellung eines Batteriemoduls (1) nach einem der vorhergehenden Ansprüche 1 bis 11 mit
einer Mehrzahl an zylindrisch ausgebildeten Batteriezellen (2), insbesondere Lithium-Ionen-Batteriezellen (20), wobei
ein erster Grundkörper (51) eines ersten Gehäuseelement (31) mit
einer Mehrzahl an zylindrisch ausgebildeten ersten Aufnahmen (41), in welchen
eine erste Mehrzahl (21) an elektrisch seriell und/oder parallel miteinander verschalteten Batteriezellen (2) aufgenommen ist, und
ein zweiter Grundkörper (52) eines zweiten Gehäuseelement (32) mit
einer Mehrzahl an zylindrisch ausgebildeten zweiten Aufnahmen (42), in welchen
eine zweite Mehrzahl (22) an elektrisch seriell und/oder parallel miteinander verschalteten Batteriezellen (2) aufgenommen ist,
unter Ausbildung eines Aufnahmeraumes (6), in welchem
eine Steuerungseinrichtung (10) des Batteriemoduls (1) aufgenommen ist, miteinander verbunden werden.

13. Verwendung eines Batteriemoduls (1) nach einem der Ansprüche 1 bis 11 in einem leichten elektrisch angetriebenen Fahrzeug (light electric vehicle).

## Claims

1. Battery module comprising a plurality of cylindrical battery cells (2),
in particular lithium-ion battery cells (20), and
a first housing element (31) with a plurality of cylindrical first receptacles (41), in which
a first plurality (21) of battery cells (2) which are connected to one another electrically in series and/or in parallel are received and
a second housing element (32) with a plurality of cylindrical second receptacles (42), in which
a second plurality (22) of battery cells (2) which are connected to one another electrically in series and/or in parallel are received, wherein
the first housing element (31) has a first main body (51) on which the first receptacles (41) are arranged and
the second housing element (32) has a second main body (52) on which the second receptacles (42) are arranged, **characterized in that**
the first main body (51) and the second main body (52) are connected to one another so as to form a receiving space (6) in which
a control device (10) of the battery module (1) is received.

2. Battery module according to preceding Claim 1,
**characterized in that**
the first main body (31) and the second main body (32) are positively connected to one another.

3. Battery module according to preceding Claim 2,
**characterized in that**
the first main body (31) and the second main body (32) are connected to one another by means of a folded seam connection (8).

4. Battery module according to one of preceding Claims 1 to 3,
**characterized in that**
the battery module (1) comprises an electronic connection (13) which is integrated into the first main body (31) and/or
into the second main body (32) and is designed
to contact the control device (10) of the battery module (1).

5. Battery module according to one of preceding Claims 1 to 4,
**characterized in that**
the battery module (1) comprises an electrical connection (14, 141, 142) which is integrated into the first main body (31) and/or
into the second main body (32).

6. Battery module according to one of preceding Claims 1 to 5,
**characterized in that**
the first plurality (21) of battery cells (2) are connected to one another in parallel in the direction of a longest extent (161) of the first main body (31) in parallel first strings (171) and/or
the second plurality (22) of battery cells (2) are connected to one another in parallel in the direction of a longest extent (162) of the second main body (32) in parallel second strings (172), wherein
the control device (10) of the battery module (1) is designed to monitor each parallel first string (171) and/or
each parallel second string (172).

7. Battery module according to one of preceding Claims 1 to 6,
**characterized in that**
the control device (10) of the battery module (1) comprises at least one first sensor element (151) which
is designed to detect a state variable of a battery cell (2) of the first plurality (21) of battery cells (2), and/or
the control device (10) of the battery module (1) comprises at least one second sensor element (152) which is designed to detect a state variable of a battery cell (2)
of the second plurality (22) of battery cells (2).

8. Battery module according to preceding Claim 7,
**characterized in that**
the first sensor element (151) is connected to a cell connector (7) which electrically connects two battery cells (2)
of the first plurality (21) of battery cells (2) and/or
the second sensor element (152) is connected to a cell connector (7) which electrically connects two battery cells (2)
of the second plurality (22) of battery cells (2).

9. Battery module according to one of preceding Claims 1 to 5, **characterized in that**
the first housing element (31) and the second housing element (32) are formed from a polymeric material.

10. Battery module according to one of preceding Claims 1 to 6,
**characterized in that**
the first plurality (21) of battery cells (2) and
the second plurality (22) of battery cells (2)
are arranged directly opposite each other.

11. Battery module according to one of preceding Claims 1 to 10,
**characterized in that**
the control device (10) can break a connection between the first electrical connection (141) or
the second electrical connection (142) and
the electronic connection (13).

12. Method for producing a battery module (1) according to one of preceding Claims 1 to 11, comprising
a plurality of cylindrical battery cells (2),
in particular lithium-ion battery cells (20), wherein
a first main body (51) of a first housing element (31) with a plurality of cylindrical first receptacles (41), in which
a first plurality (21) of battery cells (2) which are connected to one another electrically in series and/or in parallel is received, and
a second main body (52) of a second housing element (32) with a plurality of cylindrical second receptacles (42), in which
a second plurality (22) of battery cells (2) which are connected to one another electrically in series and/or in parallel is received,
are connected to one another so as to form a receiving space (6) in which a control device (10) of the battery module (1) is received.

13. Use of a battery module (1) according to one of Claims 1 to 11 in a light electric vehicle.

## Revendications

1. Module de batterie comprenant
une pluralité de cellules de batterie cylindriques (2), en particulier de cellules de batterie à ions lithium (20), et
un premier élément de boîtier (31) pourvu d'une pluralité de premiers logements cylindriques (41), dans lesquels sont logées une première pluralité (21) de cellules de batterie (2) montées électriquement en série et/ou en parallèle et
un deuxième élément de boîtier (32) pourvu d'une pluralité de deuxièmes logements cylindriques (42), dans lesquels sont logées une deuxième pluralité (22) de cellules de batterie (2) montées électriquement en série et/ou en parallèle,
le premier élément de boîtier (31) comportant un premier corps de base (51) sur lequel sont disposés les premiers logements (41) et
le deuxième élément de boîtier (32) comportant un deuxième corps de base (52) sur lequel sont disposés les deuxièmes logements (42),
**caractérisé en ce que**
le premier corps de base (51) et le deuxième corps de base (52) sont reliés l'un à l'autre pour former un espace de réception (6) dans lequel est logé un dispositif de commande (10) du module de batterie (1).

2. Module de batterie selon la revendication précédente 1,
**caractérisé en ce que**
le premier corps de base (31) et le deuxième corps de base (32) sont reliés l'un à l'autre par complémentarité de formes.

3. Module de batterie selon la revendication précédente 2,
**caractérisé en ce que**
le premier corps de base (31) et le deuxième corps de base (32) sont reliés l'un à l'autre au moyen d'une liaison par agrafage (8).

4. Module de batterie selon l'une des revendications précédentes 1 à 3,
**caractérisé en ce que**
le module de batterie (1) comprend une connexion électronique (13) intégrée dans le premier corps de base (31) et/ou dans le deuxième corps de base (32), laquelle est conçue pour venir en contact avec le dispositif de commande (10) du module de batterie (1).

5. Module de batterie selon l'une des revendications précédentes 1 à 4,
**caractérisé en ce que**
le module de batterie (1) comprend une connexion électrique (14, 141, 142) intégrée dans le premier corps de base (31) et/ou dans le deuxième corps de base (32).

6. Module de batterie selon l'une des revendications précédentes 1 à 5,
**caractérisé en ce que**
la première pluralité (21) de cellules de batterie (2) sont montées en parallèle suivant des premiers brins parallèles (171) dans la direction de l'extension la plus longue (161) du premier corps de base (31) et/ou
la deuxième pluralité (22) de cellules de batterie (2) sont montées en parallèle suivant des deuxièmes brins parallèles (172) dans la direction de l'extension la plus longue (162) du deuxième corps de base (32),
le dispositif de commande (10) du module de batterie (1) étant conçu pour surveiller chaque premier brin parallèle (171) et/ou chaque deuxième brin parallèle (172).

7. Module de batterie selon l'une des revendications précédentes 1 à 6,
**caractérisé en ce que**
le dispositif de commande (10) du module de batterie (1) comprend au moins un premier élément capteur (151) qui est conçu pour détecter une grandeur d'état d'une cellule de batterie (2) de la première pluralité (21) de cellules de batterie (2), et/ou
le dispositif de commande (10) du module de batterie (1) comprend au moins un deuxième élément capteur (152), qui est conçu pour détecter une grandeur d'état d'une cellule de batterie (2) de la deuxième pluralité (22) de cellules de batterie (2).

8. Module de batterie selon la revendication 7 précédente,
**caractérisé en ce que**
le premier élément capteur (151) est relié à un connecteur de cellules (7) qui relie électriquement deux cellules de batterie (2) de la première pluralité (21) de cellules de batterie (2) et/ou
le deuxième élément capteur (152) est relié à un connecteur de cellules (7) qui relie électriquement deux cellules de batterie (2) de la deuxième pluralité (22) de cellules de batterie (2).

9. Module de batterie selon l'une des revendications précédentes 1 à 5,
**caractérisé en ce que**
le premier élément de boîtier (31) et le deuxième élément de boîtier (32) sont en une matière polymère.

10. Module de batterie selon l'une des revendications précédentes 1 à 6,
**caractérisé en ce que**
la première pluralité (21) de cellules de batterie (2) et la deuxième pluralité (22) de cellules de batterie (2) sont disposées directement en face l'une de l'autre.

11. Module de batterie selon l'une des revendications précédentes 1 à 10, **caractérisé en ce que**
le dispositif de commande (10) peut déconnecter une liaison entre la première connexion électrique (141) ou
la deuxième connexion électrique (142) et
la connexion électronique (13).

12. Procédé de fabrication d'un module de batterie (1) selon l'une des revendications précédentes 1 à 11, comprenant
une pluralité de cellules de batterie cylindriques (2), en particulier de cellules de batterie à ions lithium (20),
un premier corps de base (51) d'un premier élément de boîtier (31) pourvu d'une pluralité de premiers logements cylindriques (41), dans lesquels sont logées une première pluralité (21) de cellules de batterie (2) montées électriquement en série et/ou en parallèle, et
un deuxième corps de base (52) d'un deuxième élément de boîtier (32) pourvu d'une pluralité de deuxièmes logements cylindriques (42), dans lesquels sont logées une deuxième pluralité (22) de cellules de batterie (2) montées électriquement en série et/ou en parallèle,
pouvant être reliés l'un à l'autre en formant un espace de réception (6), dans lequel est logé un dispositif de commande (10) du module de batterie (1).

13. Utilisation d'un module de batterie (1) selon l'une des revendications 1 à 11 dans un véhicule léger à propulsion électrique (light electric vehicle).
